(19) Europäisches Patentamt
European Patent Office
Office européen des brevets

(11) Numéro de publication: **0 116 797 B1**

# (12) FASCICULE DE BREVET EUROPEEN

(45) Date de publication du fascicule du brevet: **19.03.86**

(51) Int. Cl.[4]: **C 08 F 10/02**, C 08 F 2/38, C 08 F 4/62

(21) Numéro de dépôt: **83402477.0**

(22) Date de dépôt: **20.12.83**

(54) **Procédé continu de fabrication d'homopolymères ou de copolymères de l'éthylène.**

(30) Priorité: **24.12.82 FR 8221735**

(43) Date de publication de la demande: **29.08.84 Bulletin 84/35**

(45) Mention de la délivrance du brevet: **19.03.86 Bulletin 86/12**

(84) Etats contractants désignés: **AT BE CH DE FR GB IT LI LU NL SE**

(56) Documents cités:
**FR - A - 1 358 111**
**FR - A - 2 202 899**
**FR - A - 2 385 745**
**GB - A - 884 116**

(73) Titulaire: **Société Chimique des Charbonnages S.A., Tour Aurore Place des Reflets, F-92080 Paris La Défense Cédex 5 (FR)**

(72) Inventeur: **Levresse, Bernard, Saint-Arnould Basse Voix, F-76490 St-Arnould par Caudebec en Caux (FR)**
Inventeur: **Hilt, Edmond, 81 Résidence les Hirsons rue Jules Guesdes, F-62800 Liévin (FR)**
Inventeur: **Bujadoux, Karel, 31 Avenue Van Pelt, F-62300 Lens (FR)**

(74) Mandataire: **Dubost, Thierry, SOCIETE CHIMIQUE DES CHARBONNAGES Service Propriété Industrielle B.P. 57, F-62670 Mazingarbe (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 116 797 B1

LIBER, STOCKHOLM 1986

## Description

La présente invention concerne un procédé continu de fabrication d'homopolymères ou de copolymères de l'éthylène.

Il est connu par le brevet français n° 2.202.899 d'homopolymériser l'éthylène et de copolymériser l'éthylène avec au moins une α-oléfine, en continu, en présence d'un système catalytique de type Ziegler à température élevée et sous pression élevée.

L'installation utilisée comprend au moins un réacteur comprenant au moins une zone réactionnelle, au moins un séparateur, des circuits de recyclage de l'éthylène et le cas échéant des α-oléfines (ci-après les monomères) n' ayant pas réagi vers un compresseur secondaire recevant d'autre part les monomères frais d'un compresseur primaire, et qui alimente le réacteur sous la pression de (co)polymérisation choisie.

Dans ce type de procédé des traces des composants du système catalytique peuvent être entraîées avec les gaz circulant dans les circuits de recyclage, provoquant dans lesdits circuits une (co)polymérisation des monomères recyclés. Il se forme ainsi des (colpolymères généralementde très basse masse moléculaire (inférieure à 2000) ayant, dans les conditions ordinaires de température et de pression, l'aspect d'huiles, de graisses ou de cires. Des pièges sont généralement prévus sur les circuits de recyclage de façon à y recueillir ces (co)polymères de très basse masse moléculaire. Cependant ces (co)polymères peuvent aussi se déposer sur la paroi intérieure des conduites de recyclage et leur masse moléculaire peut augmenter par suite du passage continu des gaz de recyclage contenant des traces des composants du système catalytique. Alors que les polymères de très basse masse moléculaire sont peu gênants car faciles à éliminer, les (co)polymères de plus haute masse moléculaire (supérieure à 2000) sont très gênants et peuvent entraîner une perte de charge dans l'installation et même conduire au bouchage des conduites de recyclage.

La présente invention a pour but de remédier à ces inconvénients en proposant un procédé qui provoque l'interruption de la croissance des polymères formés dans les circuits de recyclage, ne laissant subsister, le cas échéant, que des polymères de très faible masse moléculaire (parexemple comprise entre 500 et 2000), évitant ainsi les pertes de charge entre le séparateur et le compresseur secondaire et éventuellement le bouchage des conduites de recyclage.

La présente invention a pour objet un procédé continu de fabrication d'homopolymères de l'éthylène ou de copolymères de l'éthylèneavec au moins une α -oléfine comportant de 3 à 8 atomes de carbone, comprenant successivement:

a) une promière étape de (co)polymérisation de l'éthylène à une température comprise entre 180 et 320° C, sous une pression comprise entre 300 et 2500 bars, en présence d'un système catalytique comprenant d'une part au moins un composé halogéné de métal de transition des groupes IVa à VIa de la Classification périodique et d'autre part au moins un activateur choisi parmi les hydrures et les composés organo-métalliques des métaux des groupes I à III de la Classification Périodique, le rapport molaire de l'activateur au composé de métal de transition étant compris entre 1 et 10,

b) une seconde étape de séparation du (co)polymère formé d'avec le (s) monomère (s) n'ayant pas réagi, sous une pression comprise entre 100 et 500 bars,

c) une troisième étape de recyclage de (s) monomère (s) n'ayant pas réagi, et

d) une quatrième étape de recompression jusqu'à la pression de (co)polymerisation

caractérisé en ce que lors de ladite troisième étape, on introduit dans le courant de monomère(s) recyclé(s) au moins un composé choisi parmi les amides des acides organiques saturés ou insaturés comprenant de 12 à 22 atomes de carbone, les polyalkylènepolyols comprenant de 4 à 500 atomes de carbone, et les composés comportant au moins 2 fonctions époxyde, de masse moléculaire supérieure à environ 200.

L' α -oléfine comportant de 3 à 8 atomes de carbone est choisie parni le propylène, le butène-1, le pentène-1, l'hexène-1, les méthyl-pentènes-1, l'heptène-1, l'octène-1 et leurs mélanges.

On utilise avantageusement le propylène, le butène-1, l'hexène-1, les mélanges de propylène et de butène-1, de butène-1 et d'hexène-1.

La première étape de (co)polymérisation de l'éthylène est mise en oeuvre dans au moins un réacteur comportant au moins une zone reactionnelle. On peut utiliser un ou des réacteurs autoclaves et/ou tubulaires. Afin de contrôler avec précision l'indice de fluidité du (co)polymèreforme, il peut être avantageux d'effectuer la (co)polymérisation en présence de gene.

Le système catalytique utilisé comprend d'une part au moins un composé halogéné de métal de transition des groupes IVa à VIa de laClassification Périodique qui peut être:

- du chlorure de titane violet $TiCl_3, \frac{1}{3} AlCl_3$,
- un composé de formule $(TiCl_a)(MgCl_2)_y(AlCl_3)_z(RMgCl)_b$ dans laquelle $2 \leqslant a \leqslant 3, y \geqslant 2, 0 \leqslant z \leqslant \frac{1}{3}$ et $0 \leqslant b \leqslant 1$, seul ou en mélange avec un composé de formule $TiCl_3\ (AlCl_3)_w\ (E,TiCl_4)_x$ dans laquelle $0 \leqslant w \leqslant \frac{1}{3}\ 0 \leqslant x \leqslant 0{,}03$ et E est un éther diisoamylique ou di n-butylique,

- le produit obtenu par mise en contact d'un composé complexe de magnésium comportant au moins un composé choisi parmi les monohalogénures de magnésium et les hydnures d'halogénomagnésium, et d'un halogénure de titane ou de vanadium dans lequel le métal a une valence non supérieure à 3,

- un composé de formule $(MX_a)$ $(MgX_2)_b$ $(RMgX)_c$ $(HMgX)_d$, dans laquelle M est un métal du groupe IVa ou Va de la Classification Périodique, X est un halogène, R est un radical hydrocarboné et $2 \leqslant a \leqslant 3{,}5$, $1 \leqslant b \leqslant 30$, $10c \leqslant 8$ et $0 \leqslant d \leqslant 10$,

- un composé de formule $(TiCl_3, \frac{1}{3} AlCl_3)$ $(MCl_3)_x$ $(MgX_2)_y$ dans laquelle M est un métal de transition des groupes Va et VIa de la Classification Périodique, X est un halogène, $0{,}3 \leqslant x \leqslant 3$ et $0 \leqslant y \leqslant 20$,

- un composé formé de cristaux mixtes contenant $TiCl_3$ (ou $TiCl_2$),$AlCl_3$ et d'autres chlorures métalliques tels que $FeCl_2$ $NiCl_2$, $MoCl_3$, $MgCl_2$

- un composé de formule $(MX_3)$ $(\varnothing_n SiL_{4-n})_b$ dans laquelleM est un métal de transition des groupes IVa à VIa de la Classification Périodique, ∅ est un noyau aromatique ou polyaromatique éventuellement substitué ayant de 6 à 15 atomes de carbone, L est soit un atome d'halogène, soit un groupe hydroxyle et $1 \leqslant n \leqslant 3$, $0{,}2 \leqslant b \leqslant 2$, ledit composé étant le cas échéant associé à $AlCl_3$, $MgCl_2$ et/ou un halogènure de métal du groupe VIII,

- un composé de formule $Y_{m-n}$ $M(OR)_n$ dans laquelle M représente unou plusieurs métaux des groupes Ia, IIa, IIb, IIIb et VIIa de la Classification Périodique, Y est un radical inorganique monovalent, R est un radical hydrocarboné monovalent, m est la valence de M et $1 \leqslant n \leqslant m$, mis en présence d'un dérivé halogéné d'un métal de transition des groupes IVa à VIa.

Le système catalytique comprend d'autre part au moins un activateur choisi parmi les hydrures et les composés organo-métalliques des métaux des groupes I à III de la Classification périodique, et qui peut être:

- un alkylaluminium, comme le triéthylaluminium, le tributylaluminium, le triisobutylaluminium, le trioctylaluminium,
- un chlorodialkylaluminium comme le chlorodiéthylaluminium,
- un dichloroalkylaluminium comme le dichloroéthylaluminium,
- un alkylsiloxalane de formule

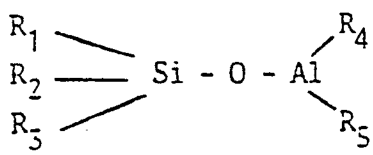

,

$R_1$, $R_2$, $R_3$, $R_4$ étant des radicaux hydrocarbonés ayant de 1à 10 atomes de carbone et $R_5$ étant soit un radical hydrocarboné ayant de 1 à 10 atomes de carbone, soit un radical du type

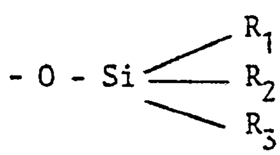

- un composé à base de fluorure d'alkylaluminium et ayant pour formules $(AlR_2F)$ $(AlR_2X)_a$ ou bien $(AlR_2F)$ $(AlR_2H)_b$ $(AlR_3)_c$, dans lesquelles R est un groupe alkyle ayant de 1 à 12 atomes de carbone, X un halogène autre que le fluor, $0{,}1 \leqslant a \leqslant 0{,}4$, $0{,}1 \leqslant b \leqslant 0{,}4$ et $0{,}05 \leqslant c \leqslant 0{,}2$.

Le système catalytique peut être déposé sur un support inerte comprenant, par exemple, un ou plusieurs des composés suivants: $MgCl_2$, $Al_2O_3$ $MoO_3$ $MnCl_2$, $SiO_2$, MgO

Les amides des acides organiques saturés utilisables selon l'invention sont par exemple le lauramide, le myristamide, le palmitamide, le stéaramide, l'arachidamide. Les amides des acides organiques insaturés utilisables selon l'invention sont par exemple l'oléamide, l'élaidamide, l'érucamide, le brassidamide. Les polyalkylènepolyols utilisables selon l'invention sont par exemple les polyéthylèneglycols de masse moléculaire comprise entre 200 et 1 0 000, les polypropylèneglycols de masse moléculaire comprise entre 250 et 4 000, les cotélomères poly (éthylène-propylène) glycols, et leurs mélanges.

Les composés comportant au moins deux fonctions époxyde utilisables selon l'invention sont notamment l'huile de soja époxydée, les dérivés époxydiques d'esters d'acides organiques polyinsaturés, les dérivés époxydiques de composés à plusieurs noyaux aromatiques, tel le diglycidyléther du bisphénol A.

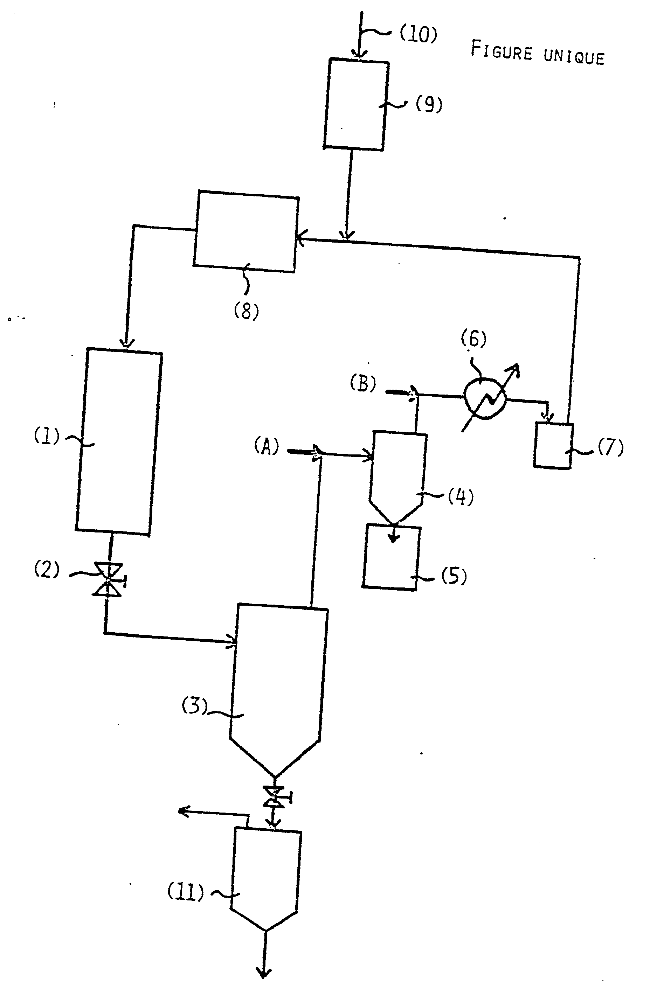

La quantité de composé utilisé selon l'invention est de préférence comprise entre 0,005 et 0,1 mole par tonne de monomères recyclés. Cette quantité peut être répartie en différents points du circuit de recyclage. Si l'on considère l'installation schématisée sur la figure unique en annexe où (1) est le réacteur de polymérisation, (2) la vanne de détente du réacteur, (3) le séparateur sous moyenne pression, (11) une trémie de séparation sous basse pression, (4) un cyclone standard monté sur un décanteur (5), (6) un réfrigérant, (7) un second décanteur, (8) le compresseur secondaire, (9) le compresseur primaire, (1 0) la conduite d'arrivée de (s) monomère (s) frais, les points d'introduction du ou des composés peuvent être situés en (A) et/ou (B).

Le composé peut être introduit soit à l'état pur, soit à l'état dilué, en solution ou en suspension dans un solvant inerte, par exemple un hydrocarbure saturé. Il est introduit par exemple de façon continue à l'aide de tout moyen approprié tel qu'une pompe haute pression.

Le procédé selon l'invention permet d'une part d'interrompre la croissance et/ou d'augmenter la fluidité des polymères fabriqués dans l'étape de recyclage des monomères et d'autre part de réduire le taux d'isomérisation du butène-1 (comonomère introduit dans le réacteur et/ou formé par dimérisation de l'éthylène) en butène-2 (composé indésirable qui ne copolymérise pas et s'accumule donc dans les cirouits de recyclage des gaz). Le procédé selon l'invention présente donc un grand intérêt sur le double plan technique et économique.

Les exemples non limitatifs suivants ont pour but d'illustrer l'invention.

**EXEMPLES 1 à 4**

L'installation utilisée est schèmatisée sur la figure en annexe (décrite précédemment). Elle comprend un réacteur (1) autoclave à 3zones dont les températures de fonctionnement sont respectivement de 210, 260 et 280° C. On copolymérise dans ce réacteur, sous une pression de 800 bars,un mélange de 60 % en poids d'éthylène et 40 % en poids de butène-1, en présence du système. catalytique ($TiCl_3$, $\frac{1}{3}$ $AlCl_3$, $VCl_3$)/3$(C_2H_5)_3Al$ introduit dans les deux premières zones réactionnelles et en présence de 0,1 % en moles d'hydrogène de manière à obtenir un copolymère d'indice de fluidité(mesuré selon la norme ASTMD 1238-73) compris entre 1 et 1,5 dg/min. Le temps de séjour moyen du systèm e catalytique dans le réacteur est de 40 secondes. Le séparateur fonctionne normalement sous une pression de 250 bars.

On introduit (sauf pour l'exemple 1 comparatif) 0,027 mole, par tonne de mélange de monomères recyclés du composé indiqué au tableauI, en chacun des points d'injection (A) et (B), c'est-à-dire au total 0,054 mole de composé par tonne de monomères recyclés.

Le stéaramide (exemple 2) est introduit en suspension à 50 g/litre dans l'huile de paraffine.

l'huile de soja époxydée (exemple 3) est un produit commercial STAVINOR ® HS 39 introduit à l'état pur.

Le polyéthylène glycol (exemple 4) est un produit commercial EMKAPOL ® 6000 (masse moléculaire 6000) introduit à l'état d'émulsion dans une coupe d'hydrocarbures $C_{12}$-$C_{14}$.

Le tableau I indique, en outre, l'indice de fluidité (IF) des graisses recueillies dans le cyclone (4) et dans le décanteur (7), le taux de butène-2 (TB2) en % en poids dans les gaz recyclés (taux mesuré à la sortie du décanteur (7)), la perte de charge PC (exprimée en bars) entre le séparateur (4) et l'aspiration du compresseur secondaire (8) au bout de 0,50, 1 00 et 200 heures de fonctionnement continu.

TABLEAU

| Exemple | Composé | I F (Indice de fluidité) | | TB2 (Taux de butène-2) | P C (Perte de charge) | | | |
|---|---|---|---|---|---|---|---|---|
| | | (4) | (7) | | 0 h | 50 h | 100 h | 200 h |
| 1 | — | 5 | 2 | 6 | 35 | 100 | 150 | 200 |
| 2 | Stéaramide | 50 | 25 | 4 | 40 | 40 | 45 | 50 |
| 3 | Huile de soja époxydée | 15 | 8 | 3 | 35 | 40 | 50 | 60 |
| 4 | Polyéthylèneglycol 6000 | 20 | 8 | 3 | 35 | 40 | 50 | 60 |

**Revendications**

1. Procédé continu de fabrication d'homopolymères de l'éthylène ou de copolymères de l'éthylène avec au moins une α-oléfine comportantde 3 à 8 atomes de carbone, comprenant successivement:

a) une première étape de (co)polymérisation de l'éthylène à une température comprise entre 180 et 320°C, sous une pression comprise entre 300 et 2500 bars, en présence d'un système catalytique comprenant d'une part au moins un composé halogéné de métal de transition des groupes IVa à VIa de la Classification Périodique et d'autre part au moins un activateur choisi parmi les hydrures et les composés organo-métalliques des métaux des groupes I à III de la Classification Périodique, le rapport molaire de l'activateur au composé de métal de transition étant compris entre 1 et 10,

b) une seconde étape de séparation du (co)polymère formé d'avec le (s) monomère (s) n'ayant pas réagi, sous une pression comprise entre 100 et 500 bars,

c) une troisième étape de recyclage de (s) monomère (s) n' ayant pas réagi, et

d) une quatrième étape de recompression jusqu'à la pression de (co)polymérisation

caractérisé en ce que lors de ladite troisième étape, on introduit dans le courant de monomère(s) recyclé(s) au moins un composé choisi parmi les amides des acides organiques saturés ou insaturés comprenant de 12 à 22 atomes de carbone, les polyalkylènepolyols comprenant de 4 à 500 atomes de carbone, et les composés comportant au moins 2 fonctions époxyde, de masse moléculaire supérieure à environ 200.

2. Procédé selon la revendication 1, caractérisé en ce que la quantité dudit composé est comprise entre 0,005 et 0,1 mole par tonne de monomère (s) recyclé (s).

3. Procédé selon l'une des revendications 1 et 2, caractérisé en ce que le composé est choisi parmi l'érucamide, l'oléamide et le stéaramide.

4. Procédé selon l'une des revendications 1 et 2, caractérisé en ce que le polyalkylènepolyol est le polyéthylèneglycol de masse moléculaire comprise entre 200 et 10.000.

5. Procédé selon l'une des revendications 1 et 2, caractérisé en ce que le polyalkylènepolyol est le polypropylèneglycol de masse moléoulaire comprise entre 250 et 4 000.

6. Procédé selon l'une des revendications 1 et 2, caractérisé en ce que le polyalkylènepolyol est un copolymère séquencé comprenant desmotifs éthylèneglycol et des motifs propylèneglycol.

7. Procédé selon l'une des revendications 1 et 2, caractérisé en ce que le composé comportant au moins 2 fonctions époxyde est l'huile de soja époxydée.

**Patentansprüche:**

1. Verfahren zur kontinuierlichen Herstellung von Homopolymeren des Äthylens oder von Copolymeren des Äthylens mit mindestens einem α-Olefin mit 3 bis 8 Kohlenstoffatomen, welches Verfahren die aufeinanderfolgenden Schritte enthält:

a) eine erste Stufe zur (Co)polymerisation von Äthylen bei einer Temperatur zwischen 180° und 320°C, unter einem Druck zwischen 300 und 2.500 bar, in Gegenwart eines Katalysatorsystems, das einerseits mindestens eine Halogenverbindung eines Übergangsmetalls der Gruppen IVa bis VIa des Periodensyste ms und anderseits mindestens einen Aktivator ausgewählt aus den Hydriden und den organometallischen Verbindungen der Metalle der Gruppen I bis III des Periodensystems enthält, wobei das Molverhältnis des Aktivators zur Übergangsmetallverbindung zwischen 1 und 10 beträgt,

b) eine zweite Stufe zur Trennung des gebildeten (Co)polymers von dem (den) nicht ausreagierten Monomer(en) unter einem Druck zwischen 100 und 500 bar,

c) eine dritte Stufe zur Rückführung des (der) nicht ausreagierten Monomer(s)(e), und

d) eine vierte Stufe zur neuerlichen Komprimierung auf den (Co)polymerisationsdruck,

dadurch gekennzeichnet, daß man während der dritten Stufe in den Strom des (der) rückgeführten Monomer(s)(e) mindestens eine Verbindung einführt, die ausgewählt ist aus den Amiden gesättigter oder ungesättigter organischer Säuren mit 12 bis 22 Kohlenstoffatomen, den Polyalkylenpolyolen mit 4 bis 500 Kohlenstoffatomen und den mindestens 2 Epoxidfunktionen enthaltenden Verbindungen, wobei die Molekularmasse dieser Verbindung(en) größer als ungefähr 200 ist.

2. Verfahren nach Anspruch 1, dadurch gekennzeichnet, daß die Menge der genannten Verbindung zwischen 0,005 und 0,1 Mol/t rückgeführte(n)(r) Monomer(s)(e) beträgt.

3. Verfahren nach Anspruch 1 oder 2, dadurch gekennzeichnet, daß die Verbindung ausgewählt ist aus den Amiden der aus Erucasäure, Ölsäure und Stearinsäure.

4. Verfahren nach Anspruch 1 oder 2, dadurch gekennzeichnet, daß das Polyalkylenpolyol Polyäthylenglycol mit einer Molekularmasse zwischen 200 und 10.000 ist.

5. Verfahren nach Anspruch 1 oder 2, dadurch gekennzeichnet, daß das Polyalkylenpolyol Polypropylenglycol mit einer Molekularmasse zwischen 250 und 4.000 ist.

6. Verfahren nach Anspruch 1 oder 2, dadurch gekennzeichnet, daß das Polyalkylenpolyol ein Athylenglycoleinheiten und Propylenglycoleinheiten enthaltendes Blockcopolymer ist.

7. Verfahren nach Anspruch 1 oder 2, dadurch gekennzeichnet, daß die mindestens 2 Epoxidfunktionen enthaltende Verbindung epoxidiertes Sojaöl ist.

**Claims**

1. A continuous process for the manufacture of homopolymers of ethylene or copolymers of ethylene with at least one α-olefin containing from 3 to 8 carbon atoms, successively comprising

a) a first step for (co)polymerizing ethylene at a temperature step between 180° and 320°C, under a pressure between 300 and 2,500 bars, in the presence of a catalytic system comprising on the one hand at least one halogenated compound of a transition metal of groups IVa to VIa of the Periodic System and on the other hand at least one activator selected from hydrides and organometallic compounds of metals of groups I to III of the Periodic System.

b) a second step for separating the (co)polymer formed from the unreacted monomer(s), under a pressure between 100 and 500 bars,

c) a third step for recycling the unreacted monomer(s), and

d) a fourth step for recompression up to the (co)polymerisation pressure, characterized by introducing into the stream of recycled monomer(s), during the said third step, at Least one compound selected from amides of saturated or unsaturated organic acids containing from 12 to 22 carbon atoms, polyalkylene polyols containing from 4 to 500 carbon atoms, and compounds containing at Least two epoxide functions and having molecular weight greater than about 200.

2. A process according to claim 1, characterized in that the amount of the said compound is between 0.005 and 0,1 mole per tonne of recycled monomer(s).

3. A process according to either of claims 1 and 2, characterized in that the compound is selected from erucamide, oleamide and stearamide.

4. A process according to either of claims 1 and 2 characterized in that the polyalkylene polyol is polyéthylene glycol with a molecular weight between 200 and 10000.

5. A process according to either of claims 1 and 2, characterized in that the polyalkylene polyol is polypropylene glycol with a molecular weight between 250 and 4 000.

6. A process according to either of claims 1 and 2, characterized in that the polyalkylene polyol is a cotelomer comprising ethylene glycol units and polypropylene units.

7. A process according to either of claims 1 and 2, characterized in that the compound containing at least two epoxide functions is epoxydized soya bean oil.

FIGURE UNIQUE